# EUROPEAN PATENT APPLICATION

(11) **EP 4 675 769 A2**
(43) Date of publication of application: **07.01.2026**
(21) Application number: 25210627.3
(22) Date of filing: 25.07.2023
(51) Int. Cl.: H01M 10/6567

(54) **BATTERY PACK WITH IMPROVED SAFETY**

(30) Priority: 01.09.2022 KR 20220110496
(62) Divisional of application: 23860692.5
(71) Applicant: LG Energy Solution, Ltd., Seoul 07335 (KR)
(72) Inventor: SHIN, Ju Hwan, 34122 Daejeon (KR); PARK, Seung Chul, 34122 Daejeon (KR); KIM, Ki Young, 34122 Daejeon (KR); LEE, Hyoung Suk, 34122 Daejeon (KR)
(74) Representative: Plasseraud IP

(57) **Abstract**

Disclosed herein relates to a battery pack, wherein the cell stack assemblies are housed in a pack case with the frame of the module excluded, thereby providing good heat dissipation during normal operation. In addition, the battery pack has the advantage of improving safety against ignition or explosion of the battery pack, since in the event of abnormal operation in which any of the plurality of cell stack assemblies provided therein generates heat or undergoes thermal runaway, the heat of the cell stack assembly can be suppressed from propagating to adjacent cell stack assemblies by forming a separation space between the base plate and the corresponding cell stack assembly due to vaporization of the heat-conducting pad.

## Description

### [Technical Field]

The present invention relates to a battery pack with improved safety during thermal runaway.

This application claims the benefit of priority to Korean Patent Applications No. 10-2022-0110496, filed on Sept. 1, 2022, the disclosure of which is incorporated herein by reference in its entirety.

### [Background Technology of the Invention]

Currently, commercialized secondary batteries include nickel-cadmium batteries, nickel-hydrogen batteries, nickel-zinc batteries, and lithium secondary batteries. Of these, lithium secondary batteries are gaining traction due to their ability to charge and discharge freely with little memory effect, very low self-discharge rate, and high energy density compared to nickel-based secondary batteries.

These lithium secondary batteries primarily utilize lithium-based oxides and carbon materials as anode and cathode active materials, respectively. A lithium secondary battery comprises an electrode assembly, wherein an anode plate and a cathode plate with such anode active material and cathode active material, respectively, are disposed between a separator, and an outer material, i.e., a battery case, in which the electrode assembly is sealed together with an electrolyte.

In general, depending on the shape of the exterior material, lithium secondary batteries can be classified into can-type secondary batteries, where the electrode assembly is embedded in a metal can, and pouch-type secondary batteries, where the electrode assembly is embedded in a pouch of an aluminum laminated sheet.

In recent years, secondary batteries have been widely used not only in small devices such as portable electronics, but also in medium and large devices such as automobiles and energy storage systems (ESS) for power and energy storage. Secondary batteries are installed in battery packs and mounted on medium and large devices, and the like. Here, in order to increase the capacity and output of the battery pack, a large number of secondary batteries are included in the battery pack and electrically connected to each other. Here, a plurality of secondary batteries may be housed inside one module case to constitute one battery module, and a plurality of battery modules may be housed inside one pack case to constitute one battery pack.

Generally, secondary batteries can degrade when used in environments with higher-than-optimal temperatures, and in severe cases, may explode or ignite. Furthermore, when a plurality of secondary batteries is used to form a battery pack, the heat from the plurality of secondary batteries in a small space can be summed up, causing the temperature of the battery pack to rise more rapidly and severely. In particular, battery packs for vehicles or power storage devices, which are often used outdoors, are frequently exposed to direct sunlight and may be subjected to severe high temperature conditions, such as in summer or in desert areas.

Moreover, in some of the battery modules of the plurality of battery modules provided in the battery pack, or in some of the secondary batteries of the plurality of secondary batteries provided in the battery pack, an abnormal situation may occur that causes the battery to generate heat. This heating may cause the temperature of the battery to rise continuously, which may cause the battery to exceed a predetermined threshold temperature, which may lead to a thermal runaway condition. If this heat generation or thermal runaway is not properly controlled, the safety of the battery pack cannot be properly assured.

### [Prior Art Document]

Korean Patent Publication No. 10-2019-0018389

### [Description of the Invention]

### [Technical Problem]

Accordingly, it is an object of the present invention to provide a battery pack with improved safety by effectively controlling heat generation or thermal runaway situations.

### [Technical Solution]

To address the problems described above,
In an exemplary embodiment, the present invention provides
a battery pack, comprising:
   a plurality of cell assemblies;
   a pack case housing the plurality of cell stack assemblies and containing,
      a base plate including a plurality of cell stack areas where each cell stack assembly is located in each of the plurality of cell stack areas,
      a sidewall extending vertically and coupled along an edge of the base plate to enclose the plurality of cell stack areas, and
      a bulkhead coupled to the sidewall and compartmentalizes the base plate to form the plurality of cell stack areas, wherein at least one among the sidewall and bulkhead includes a support part projecting inwardly at an inner lower part thereof to support each cell stack assembly; and
   a heat-conducting pad between the base plate and the cell stack assembly that phase changes to a gaseous state at a high temperature to form a separation space.

Here, the support part may be formed along an inner lower part of a sidewall or bulkhead to support an edge of the lower surface of the cell stack assembly.

In addition, the support part may include a silicate member composed of silicates containing one or more of the following elements: silicon (Si), aluminum (Al), iron (Fe), magnesium (Mg), manganese (Mn), titanium (Ti), sodium (Na), potassium (K) fluorine (F), and oxygen (O).

Moreover, the heat-conducting pad may include a polymer that vaporizes or sublimates at 100°C. to 800°C. Specifically, the heat-conducting pad may have a structure in which a heat-conducting filler is dispersed in a matrix including a polymer that vaporizes or sublimates at 100°C. to 800°C.

In addition, the heat-conducting pad comprises: a first layer in which a lower surface abuts a base plate, and a second layer formed on the first layer and having an upper surface abutting a cell stack assembly. Here, the heat-conducting pad may have a content of heat-conducting filler in the first layer greater than a content of heat-conducting filler in the second layer.

In addition, the heat-conducting filler may be included in the amount of 1 wt.% to 30 wt.% with respect to the total weight of the heat-conducting pad.

Moreover, the heat-conducting filler may include one or more of the following: aluminum, copper, zinc, magnesium, stainless steel, silver, alumina (Al₂O₃), silicon dioxide (SiO₂), aluminum nitride (AlN₃), carbon nanotubes, silicon carbide (SiC), graphite, and activated carbon.

In addition, the heat-conducting pad may have an average thickness of 0.5 mm to 5.5 mm, and a thickness equal to or greater than the separation distance between the cell stack assembly and the base plate.

### [Advantageous Effects]

The battery pack according to the present invention has a good heat dissipation effect during normal operation because the cell stack assemblies are housed in the pack case with the frame of the module excluded. Furthermore, the battery pack has the advantage of improving safety against ignition or explosion of the battery pack, since in the event of abnormal operation in which any of the plurality of cell stack assemblies provided therein generates heat or undergoes thermal runaway, the heat of the cell stack assembly can be suppressed from propagating to adjacent cell stack assemblies by forming a separation space between the base plate and the corresponding cell stack assembly due to vaporization of the heat-conducting pad.

### [Brief Description of the Drawings]

FIG. 1 is a perspective view illustrating the structure of a battery pack according to the present invention.
FIG. 2 is a cross-sectional view of the structure of a conventional battery pack mounted with a cell stack assembly.
FIGS. 3 and 4 are cross-sectional views illustrating the structure of a battery pack according to the present invention mounted with a cell stack assembly.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Battery pack

In an exemplary embodiment, the present invention provides
a battery pack housing a plurality of cell assemblies, comprising:
a plurality of cell assemblies;
a pack case housing the plurality of cell stack assemblies and containing,
   a base plate including a plurality of cell stack areas where each cell stack assembly is located in each of the plurality of cell stack areas,
   a sidewall extending vertically and coupled along an edge of the base plate to enclose the plurality of cell stack areas, and
   a bulkhead coupled to the sidewall and compartmentalizes the base plate to form the plurality of cell stack areas, wherein at least one among the sidewall and bulkhead includes a support part projecting inwardly at an inner lower part thereof to support each cell stack assembly; and
a heat-conducting pad between the base plate and the cell stack assembly that phase changes to a gaseous state at a high temperature to form a separation space.

A battery pack according to the present invention includes a plurality of cell stack assemblies and a pack case housing them. The pack case includes a support part for supporting the cell stack assemblies at an inner side of the lower part of at least one among the sidewall and the bulkhead such that the cell stack assemblies are positioned at a certain height spaced apart from the base plate; and a heat-conducting pad that phase changes to a gaseous state at a high temperature to form a separation space between the base plate and the cell stack assemblies fixed to the support part. The support part and the heat-conducting pad may form a separation space between the base plate and the corresponding cell stack assembly due to vaporization of the heat-conducting pad during heat generation in any one of the plurality of cell stack assemblies or thermal runaway. The formed separation space may inhibit heat from the corresponding cell stack assembly from propagating to neighboring cell stack assemblies, thereby inhibiting ignition and/or explosion of the battery pack.

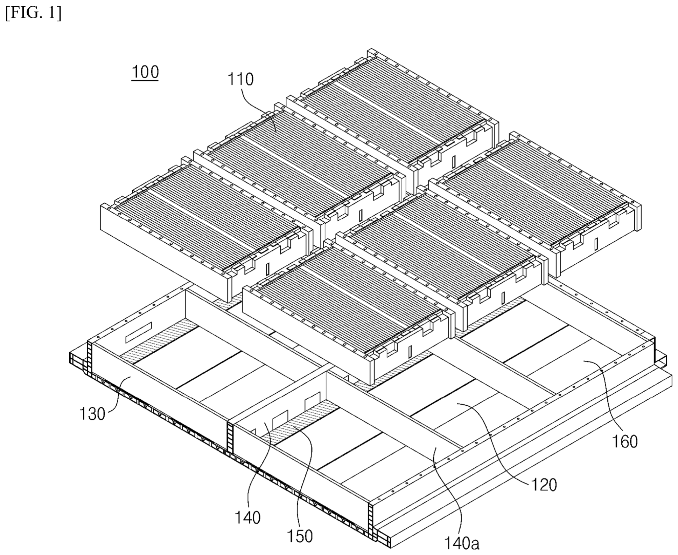

FIGS. 1, 3, and 4 are perspective and cross-sectional views illustrating the structure of a battery pack 100 according to the present invention. The following will be described in more detail with reference to FIGS. 1, 3, and 4.

The battery pack 100 of the present invention includes a cell stack assembly 110 and a pack case in which the cell stack assembly 110 is housed.
The cell stack assembly 110 referred to herein may exclude a module frame configuration that encloses and protects a cell stack in which a plurality of battery cells stacked together, and may include a configuration that couples a busbar frame and end plates on the front and back surfaces, respectively, where electrode leads are formed in the cell stack.

Here, the cell stack has a stacked structure of a plurality of battery cells, the battery cells include an electrode assembly on the inside, and includes a pair of electrode leads electrically connected to the electrode assembly, and a battery case enclosing the electrode assembly such that the electrode leads are drawn outwardly. The electrode leads may be drawn out on each side of the battery case.

In addition, the busbar frame includes a busbar electrically connected with the battery cells. The busbar frame is tightly coupled to the cell stack at the front and rear of the cell stack such that electrode leads of each battery cell included in the cell stack are connected to the busbar.

Furthermore, the end plate is coupled with the busbar frame to cover the busbar to protect the busbar and electrode leads and the like from external impact. In addition, the end plate gathers and fixes each battery cell included in the cell stack.

The cell stack assembly excludes a module frame configuration that encloses and protects the cell stack as described above, but instead is provided with end plates that structurally fix the stacked battery cells and a busbar frame that electrically connects the fixed battery cells, thereby has the advantage of allowing for more efficient dissipation of heat generated by the plurality of battery cells during charge and discharge, as well as reducing the unit weight of the cell stack.

In addition, the cell stack assembly 110 may be provided in the battery pack in plurality. Furthermore, the plurality of cell stack assemblies 110 may be arranged in a left-to-right direction with side surfaces facing each other. For example, the battery pack 100 may include at least two cell stack assemblies 110. In this case, the two cell stack assemblies 110 may be arranged in a left-to-right direction in the form of a right side and a left side facing each other.

In addition, the battery pack 100 includes a pack case including the cell stack assembly 110 described above, and may further include a pack case cover (not shown) that is coupled to the pack case to cover an upper part of the cell stack assembly 110 at an upper part of the pack case, as needed.
Here, the pack case includes a base plate 120 disposed at a lower part of the cell stack assembly 110 to include a cell stack area in which the cell stack assembly 110 is located, wherein the base plate 120 may have a plate shape extending in a horizontal direction. As used herein, the horizontal direction refers to a surface direction of a flat ground surface. The base plate 120 may be provided with a metal material having good mechanical rigidity.

In addition, a plurality of cell stack assemblies 110 may be located on the upper part of the base plate 120. For this purpose, the base plate 120 includes a cell stack area in which the cell stack assemblies 110 are located. In this case, the base plate 120 may be coupled to each other with sidewalls 130 extending vertically along the edge of the base plate to enclose the cell stack area to form a space for housing the cell stack assemblies 110.

In addition to performing the function of providing a space for the cell stack assembly 110 to be housed at the lower part, the base plate 120 may also perform the function of a heat sink to dissipate heat generated by the cell stack assembly 110 to the outside. To this end, the base plate 120 may be provided with cooling means (not shown) on the other side of the side on which the battery module 110 is housed, so that a refrigerant such as coolant or air can flow in a contacted state. In addition, the coupling of the sidewalls 130 may be performed in a manner conventional in the art, for example, by friction stir welding, or the like.

Moreover, the pack case includes a bulkhead 140 that divides the interior space into a plurality of cell stack assembly areas such that a plurality of cell stack assemblies 110 may be mounted in the accommodation space provided by the sidewalls 130. Here, the bulkhead 140 may be coupled at both ends to be perpendicular between the two opposing sidewalls 130, as shown in FIG. 1, with a lower end part configured to be coupled with an upper surface of the base plate 120.

Additionally, at least one among the sidewall 130 and the bulkhead 140 includes a support part 150 that fixes the cell stack assembly 110 to the inner lower part such that the cell stack assembly 110 is positioned at a certain height spaced apart from the base plate 120.

The support part 150 is located at an inner lower part of the sidewall 130 and/or bulkhead 140 and functions to support the lower surface of the cell stack assembly 110 so that it is spaced from the upper side of the base plate 120 by a certain distance. To this end, the support part 150 may be shaped to support the cell stack assembly 110 from the lower part. Specifically, the support part 150 may have a shape that projects vertically from an inner lower part of the sidewall 130 and/or bulkhead 140, as shown in FIG. 1, and has a surface that is opposed to a lower surface of the cell stack assembly 110 to support the cell stack assembly 110.

In addition, the support part 150 may be disposed on an inner side of the sidewall 130 and/or bulkhead 140 to be spaced apart from the cell stack assembly 110 by a predetermined distance. Specifically, the support part 150 may be disposed at a height of 0.5 mm to 5.0 mm relative to the upper surface of the base plate 120, and more specifically, may be disposed at a height of 0.5 mm to 3.0 mm; 0.5 mm to 1.5 mm; or 0.8 mm to 1.2 mm. By adjusting the position of the support part 150 to satisfy the height relative to the upper surface of the base plate 120, the present invention can prevent an excessive separation distance from reducing the efficiency of internal heat dissipation during normal operation of the battery pack 100. Furthermore, by adjusting the position of the support part 150 as described above, when any of the plurality of cell stack assemblies 110 generates heat or during a thermal runaway, it can prevent the small separation distance from causing heat to rapidly transfer to the neighboring cell stack assemblies 110 through the base plate 120, which functions as a heat sink.

Furthermore, the support part 150 may be provided along an inner lower part of the sidewall 130 and/or bulkhead 140 to more firmly support the cell stack assembly 110. Accordingly, the support part 150 may be shaped to support an edge region of a lower surface of the cell stack assembly 110.

In addition, the support part 150 may be configured by a material that is stiff enough to support the cell stack assembly 110, yet insulating enough to not be deformed by high internal temperature during abnormal operation of the battery pack 100. Specifically, the support part 150 may be configured by a silicate material that has high stiffness and insulating properties and has both good heat resistance and good insulation.

The silicate material referred to in the present invention is composed of a silicate, and silicate may be applied without limitation as long as it is one conventionally used in the art, more particularly, one containing one or more elements selected from silicon (Si), aluminum (Al), iron (Fe), magnesium (Mg), manganese (Mn), titanium (Ti), sodium (Na), potassium (K) fluorine (F), and oxygen (O) may be used.

In general, silicates are neutral salts in which the hydrogen of silicic acid is substituted with atoms of other metals, in the present invention, elements such as aluminum (Al), iron (Fe), magnesium (Mg), manganese (Mn), titanium (Ti), sodium (Na), and potassium (K) can be substituted for the hydrogen in order to achieve a flame retardant and/or flame resistant effect, and layered silicates can be used, especially for flame retardancy.

For example, the silicates may include one or more of the following: dolomite, penzite, seladonite, paragonite, margarite, wollastonite, biotite, anatase, goethite, siderophyllite, clinoptilolite, clintonite, lithium dolomite, trilithionite, polytitanite, zinwaldite, and taniolite.

In one example, the support part 150 may include a mica sheet including mica. Mica is one of the crude rock materials comprising granite, and has excellent electrical insulating properties, and is characterized by very little change in properties when heated. The mica has good shape stability and insulation resistance even at high temperatures of 500~1000°C. In addition, mica has excellent flame resistancy and does not produce smoke when burned or heated. These properties allow for a stable gap between the cell stack assembly 110 and the base plate 120 even during abnormal operation of the battery pack 100.

In addition, in order to manufacture the silicate, e.g., mica, into a sheet shape, the support part 150 may be made from scrap or ground mica mixed with a binder (e.g., heat-resistant silicone), molded into a large plate, and then cut to a suitable length to form a sheet shape that matches the size of the electrode assembly. However, the manufacturing method of the mica sheet is not limited to this, and the mica sheet can be manufactured in a variety of ways according to techniques known in the art.

Here, "as a major component" may mean that the subject ingredient included in at least 60 parts by weight, at least 70 parts by weight, at least 80 parts by weight, at least 85 parts by weight, at least 90 parts by weight, at least 95 parts by weight, at least 98 parts by weight, or at least 99 parts by weight of the total 100 parts of the substance.

In one example, the support part 150 may contain 1 to 20 parts by weight of binder with respect to the total 100 parts by weight of silicate.
In addition, the binder included in the sheet can be any one having good adhesion to the silicate. Specifically, the binder may include one or more of, but not limited to, polyolefin including polyethylene (PE), polypropylene (PP), or poly(ethylene-propylene) copolymers; polyamides including nylon; and heat-resistant silicones.

Furthermore, the pack case includes a heat-conducting pad 160 in the separation space formed between the cell stack assembly 110 and the base plate 120 by the support part 150. The heat-conducting pad 160 functions to transfer heat generated by the cell stack assembly 110 to the base plate 120 for dissipation through the base plate 120 during normal operation of the battery pack 100, and to vaporize or sublimate during abnormal operation of the battery pack 100, such as during heat generation and/or thermal runaway of the cell stack assembly 110 in contact with the heat-conducting pad 160 to form the separation space between the cell stack assembly 110 and the base plate 120.

To this end, the heat-conducting pad 160 may include a polymer that vaporizes or sublimates at 100 to 800°C to form a separation space during abnormal operation of the cell stack assembly 110. More specifically, the polymer included in the heat-conducting pad 160 may include an acrylic resin, an ethoxy resin, a polystyrene-based resin, a silicone resin, a polyester resin, a polyolefin resin, or the like, and may be vaporized or sublimated at 100-600°C; 100-400°C; 100-300°C; or 150-300°C by using additives to these resins or by physico-chemical modification. By configuring the heat-conducting pad with a polymer that vaporizes or sublimates in the above range, the present invention can achieve a cooling effect due to the heat of vaporization/sublimation of the heat-conducting pad in the event of heat generation and/or thermal runaway of the cell stack assembly 110 compared to a conventional heat-conducting pad configured with a polymer that simply melts, and at the same time, the heated cell stack assembly 110 and the base plate 120 can be spaced apart before the ignition and/or explosion of the battery pack 100 occurs, so that the heat of the heating and/or thermal runaway of the cell stack assembly 110 can be prevented from propagating to the neighboring cell stack assembly.

In addition, the heat-conducting pad 160 may implement a high thermal conductivity as a matrix including a polymer that vaporizes or sublimates at 100 to 800°C (hereinafter referred to as a "polymeric matrix") itself, and may have a structure in which a heat-conducting filler is dispersed in the matrix including the polymer that vaporizes or sublimates at 100 to 800°C to implement a higher thermal conductivity.

In this case, the heat-conducting filler may be applied without being limited as long as it is applied to implement a heat-conducting effect in a battery, battery module, or battery pack or the like, but may specifically include one or more of aluminum, copper, zinc, magnesium, stainless steel, silver, alumina (Al₂O₃), silicon dioxide (SiO₂), aluminum nitride (AlN₃), silicon carbide (SiC), carbon nanotubes, graphite, and activated carbon.

In addition, the heat-conducting filler may be included in an amount of 1 to 30 wt% with respect to the total weight of the heat-conducting pad to prevent contact of the cell stack assembly 110 with the base plate 120 after vaporization or sublimation of the polymeric matrix. More specifically, the heat-conducting filler may be included in an amount of 1 to 20 wt%; 1 to 10 wt%; 10 to 30 wt%; 15 to 30 wt%; or 10 to 20 wt%, based on the total weight of the heat-conducting pad.

Furthermore, the heat-conducting filler may be a needle-shaped particle or a fiber-shaped particle in order to implement a high thermal conductivity of the heat-conducting pad even if it contains a small amount of heat-conducting filler. In this case, the heat-conducting filler has the advantage of being able to form an inter-filler heat conduction network inside the polymeric matrix even if a small amount of the heat-conducting filler is dispersed, thereby implementing a high thermal conductivity.

Here, the average size of the heat-conducting filler may be 1,000 µm or less, more specifically, 900 µm or less; 750 µm or less; 500 µm or less; 300 µm or less; 100 µm or less; 1 to 500 µm; 10 to 500 µm; 50 to 500 µm; 100 to 500 µm; 200 to 400 µm; or 50 to 300 µm. Here, "average size" may mean the average value of the "long axis length" (the longest length through the center of the particle) and the "short axis length" (the shortest length through the center of the particle) of the heat-conducting filler. By adjusting the average size of the heat-conducting filler to the above range, the present invention can prevent contact between the cell stack assembly 110 and the base plate 120 after vaporization or sublimation of the polymeric matrix, while implementing a high conductivity of the heat-conducting pad 160.

Meanwhile, the heat-conducting pad 160 may have a single-layer structure, and in some cases, a multi-layer structure. A heat-conducting pad with a multi-layer structure may include different types and/or contents of heat-conducting fillers in each layer, thereby further enhancing the heat dissipation effect of the heat-conducting pad.

In one example, the heat-conducting pad 160 may have a structure including: a first layer having a lower surface abutting a base plate; and a second layer formed on the first layer and having an upper surface abutting a cell stack assembly. Here, the content of the heat-conducting filler in the first layer may be greater than the content of the heat-conducting filler in the second layer. In this case, the heat transfer rate of the first layer in contact with the base plate 120 can be significantly increased, thereby increasing the heat dissipation efficiency of the heat-conducting pad during normal operation of the battery pack 100. In addition, by increasing the content ratio of the polymeric matrix of the second layer compared to the first layer, it is possible to induce faster vaporization or sublimation of the heat-conducting pad 160 during abnormal operation of the battery pack 100, which has the advantage of more rapidly preventing heat from a cell stack assembly that is experiencing heat generation or thermal runaway from being transferred to an adjacent cell stack assembly.

In addition, the structure, height (or thickness), etc. of the heat-conducting pad 160 may be controlled by the location of the support part 150.

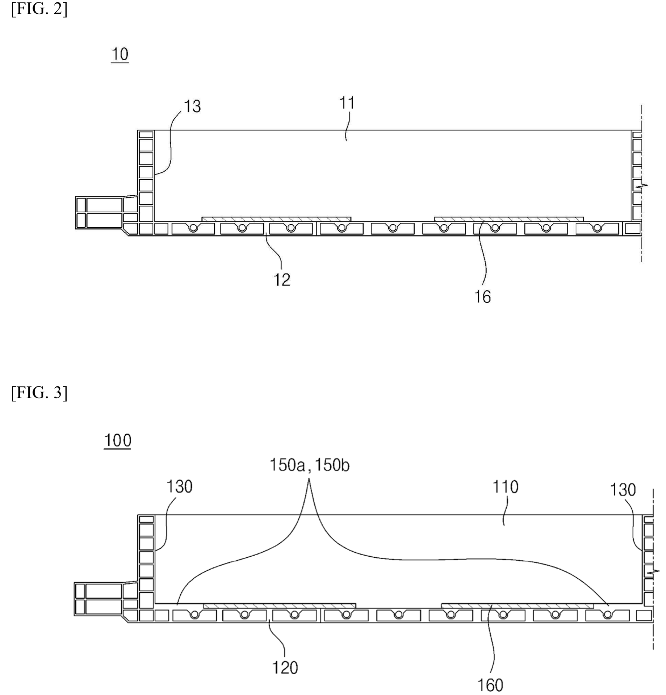

As one example, when the support parts 150a and 150b are located at the inner lower part of the sidewall 130 and/or the bulkhead 140, as shown in FIG. 3, the height (or thickness) of the support parts 150a and 150b may be equal to the separation distance between the cell stack assembly 110 and the base plate 120. In this case, the heat-conducting pad 160 may be a single-layer structure and may have the same height (or thickness) as the support parts 150a and 150b.

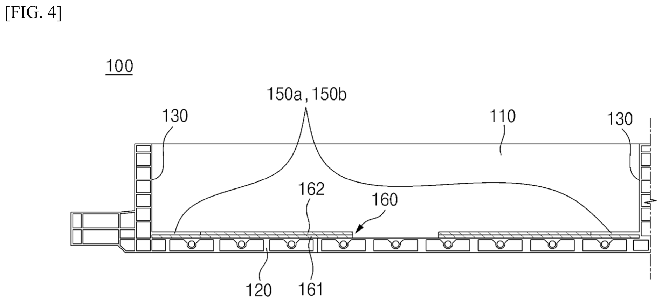

As another example, when the support parts 150a and 150b are located in the middle of the inner lower part of the sidewall 130 and/or bulkhead 140, as shown in FIG. 4, the heat-conducting pad 160 may have a two-layer structure and its height (or thickness) may be thicker than the support parts 150a and 150b. Specifically, if the support parts 150a and 150b are located in the middle of the inner lower part of the sidewall 130 and/or the bulkhead 140, the first layer 161 can be located in the lower part of the support part 150 such that it fills all of the cell stack assembly area of the base plate 120. Moreover, the second layer 162 may be provided on the first layer 161 and may have a height (or thickness) equal to or higher than the support parts 150a and 150b such that it completely fills the cell stack assembly area along with the support parts 150a and 150b. In this case, it may be desirable for the second layer 162 to have a height (or thickness) equivalent to the support parts 150a and 150b.

In addition, the heat-conducting pad 160 may have an average thickness of 0.5 mm to 5.5 mm, but may have a thickness equal to or thicker than the separation distance between the cell stack assembly 110 and the base plate 120. By having an average thickness equal to or thicker than the separation distance between the cell stack assembly 110 and the base plate 120, the heat generated by the cell stack assembly 110 can be easily dissipated to the base plate 120, that is, from the upper surface to the lower surface of the heat-conducting pad 160, during normal operation of the battery pack 100. Furthermore, the heat-conducting pad 160 has the advantage of being more secure, as it can act as a buffer in the event that an external force is applied to the battery pack 100, particularly if the external force is applied from the upper part.

Furthermore, the heat-conducting pad 160 may be disposed throughout the cell stack area of the base plate 110, and in some cases may be partially disposed. The heat-conducting pad 160 may be disposed throughout the cell stack area of the base plate 110, but partially formed in a certain area, more specifically, 60 to 99% of the total area, which may increase the surface area of the surface in contact with the cell stack assembly 110, thereby further improving thermal conductivity.

In one example, the cell stack area may include a center part and a peripheral part, and the heat-conducting pad may be located in the center part. In this case, the heat-conducting pad may have the advantage of more effectively dissipating internal heat, which has a high frequency and degree of heat generation during normal operation of the battery pack.

The battery pack according to the present invention has the advantage that by having the above-described configuration, it is possible to inhibit the propagation of heat from any of the plurality of cell stack assemblies provided therein to adjacent cell stack assemblies by forming a separation space between the base plate and the corresponding cell stack assembly due to vaporization of the heat-conducting pad in the event of heat generation or thermal runaway, thereby improving the safety of the battery pack against ignition or explosion.

Hereinafter, the present invention will be described in more detail by way of examples and experimental examples.

However, the following examples and experimental examples are illustrative of the present invention, and the present invention is not limited to the following examples.

### Comparative Examples.

A battery pack was prepared in which eight cell stack assemblies including ten pouch cells were inserted into a pack case, two horizontally and two vertically. In this case, the pack case has the structure as shown in FIG. 1, but the "support part" and "heat-conducting pads" are excluded.

### Examples.

A battery pack was prepared in which eight cell stack assemblies including ten pouch cells were inserted into a pack case, two horizontally and two vertically. In this case, a pack case having the same structure as FIG. 1 was used, but the support part and heat-conducting pads were adjusted to have a structure as in FIG. 3 or FIG. 4.

Here, the separation distance between the cell stack assembly and the base plate was adjusted to be about 1.8±0.2 mm. In addition, the heat-conducting pad was composed of a polymeric matrix having a polymer as the main component that vaporizes at 300±50°C, and in the case of having a heat-conducting filler, needle-shaped copper particles were applied as a heat-conducting filler in an amount of about 15 wt% based on the total weight of the heat-conducting pad.

**[Table 1]**

| | Heat-conducting Pad Structure | Whether heat-conducting filler is included |
|---|---|---|
| Example 1 | Single-layer structure (structure in FIG. 3) | X |
| Example 2 | Single-layer structure (structure in FIG. 3) | O |
| Example 3 | Two-layer structure (structure in FIG. 4) | O |
| | | (First layer: 5 wt%/second layer: 10 wt%) |

### Experimental Examples.

To evaluate the safety of a battery pack according to the present invention, thermal runaway was induced in one of the cell stack assemblies mounted in the battery pack and the time taken for ignition to occur in the cell stack assembly adjacent to the cell stack assembly where thermal runaway was induced was measured.

Specifically, the battery packs prepared in the Examples and Comparative Examples were all charged to 100% SOC. Then, a heating pad was then mounted on the upper part of any one of the four centrally placed cell stack assemblies of the eight cell stack assemblies housed in the pack case, and the heating pad was operated at 300 W to induce thermal runaway of the cell stack assemblies placed in the lower part of the heating pad. Here, while observing the inside of the battery pack for 10 minutes from the time the heating pad was activated, i) the time it took for the cell stack assembly placed in the lower part of the heating pad to ignite was measured, and ii) whether the cell stack assembly placed adjacent to the cell stack assembly mounted with the heating pad ignited was checked. The results are shown in Table 2.

**[Table 2]**

| | Ignition time required | Whether adjacent cell stack assemblies are ignited |
|---|---|---|
| Comparative Example 1 | 3 minutes, 51 seconds | O |
| Example 1 | 4 minutes, 41 seconds | X |
| Example 2 | 5 minutes 8 seconds | X |
| Example 3 | 5 minutes, 11 seconds | X |

As shown in Table 2 above, it can be seen that the battery pack according to the present invention has improved high temperature safety.

Specifically, the battery packs of the examples were found to inhibit ignition of the battery modules when the cell stack assemblies are exposed to high temperatures because the heat-conducting pads vaporize to form a separation space between the cell stack assemblies and the base plate, which functions as a heat sink, preventing heat propagation to adjacent cell stack assemblies.

On the other hand, battery packs of comparative examples with the cell stack assemblies exposed to high temperatures and the base plate positioned to butt against each other showed ignition in the adjacent cell stack assembly.

From these results, it follows that a battery pack according to the present invention can inhibit the propagation of heat from a cell stack assembly to adjacent cell stack assemblies by forming a separation space between the base plate and the corresponding cell stack assembly due to vaporization of the heat-conducting pad during high temperature heating or thermal runaway of the cell stack assembly.

While the foregoing has been described with reference to preferred examples of the invention, it will be understood by those skilled in the art or having ordinary knowledge of the art that various modifications and changes can be made to the invention without departing from the field of thought and technology described in the patent claims that will follow.

Accordingly, the technical scope of the invention is not limited to what is described in the detailed description of the specification, but must be determined by the claims of the patent.

### [Reference numerals]

10: CONVENTIONAL BATTERY PACK
100: BATTERY PACK OF THE PRESENT INVENTION
11, 110: CELL STACK ASSEMBLY
12, 120: BASE PLATE
13, 130: SIDEWALL
140, 140a: BULKHEAD
150, 150a, 150b: SUPPORT PART
16, 160: HEAT-CONDUCTING PAD
161: FIRST LAYER OF HEAT-CONDUCTING PAD
162: SECOND LAYER OF HEAT-CONDUCTING PAD

Preferred embodiments of the Invention are specified in the following items:
Item 1. A battery pack, comprising:
   a plurality of cell assemblies;
   a pack case housing the plurality of cell stack assemblies and containing,
      a base plate including a plurality of cell stack areas where each cell stack assembly is located in each of the plurality of cell stack areas,
      a sidewall extending vertically and coupled along an edge of the base plate to enclose the plurality of cell stack areas, and
      a bulkhead coupled to the sidewall and compartmentalizes the base plate to form the plurality of cell stack areas, wherein at least one among the sidewall and bulkhead includes a support part projecting inwardly at an inner lower part thereof to support each cell stack assembly; and
   a heat-conducting pad between the base plate and the cell stack assembly that phase changes to a gaseous state at a high temperature to form a separation space.
Item 2. The battery pack of item 1, wherein the support part is formed along an inner lower part of a sidewall or bulkhead to support an edge of the lower surface of the cell stack assembly.
Item 3. The battery pack of item 1, wherein the support part is a silicate member composed of silicates containing one or more of the following elements: silicon Si, aluminum Al, iron Fe, magnesium Mg, manganese Mn, titanium Ti, sodium Na, potassium K fluorine F, and oxygen O.
Item 4. The battery pack of item 1, wherein the heat-conducting pad includes a polymer that vaporizes or sublimates at 100 to 800°C.
Item 5. The battery pack of item 1, wherein the heat-conducting pad has a structure in which a heat-conducting filler is dispersed in a matrix including a polymer that vaporizes or sublimates at 100 to 800°C.
Item 6. The battery pack of item 1, wherein the heat-conducting pad comprises: a first layer in which a lower surface abuts a base plate, and a second layer disposed on the first layer and having an upper surface abutting the cell stack assembly.
Item 7. The battery pack of item 6, wherein the heat-conducting pad has a content of heat-conducting filler in the first layer greater than the content of heat-conducting filler in the second layer.
Item 8. The battery pack of item 5, wherein the heat-conducting filler is included in an amount of 1 wt.% to 30 wt.% with respect to a total weight of the heat-conducting pad.
Item 9. The battery pack of item 5, wherein the heat-conducting filler includes one or more of the following: aluminum, copper, zinc, magnesium, stainless steel, silver, alumina Al₂O₃, silicon dioxide SiO₂, aluminum nitride AlN₃, carbon nanotubes, silicon carbide SiC, graphite, and activated carbon.
Item 10. The battery pack of item 1, wherein the heat-conducting pad has an average thickness of 0.5 mm to 5.5 mm, and a thickness equal to or greater than the separation distance between the cell stack assembly and the base plate.

## Claims

1. A battery pack, comprising:
a plurality of cell assemblies;
a pack case housing the plurality of cell stack assemblies, including a support part for supporting the cell stack assemblies at an inner side of the lower part of a sidewall of the pack case housing and/or at a bulkhead of the pack case housing such that the cell stack assemblies are positioned at a certain height spaced apart from a base plate of the pack case housing; and
a heat-conducting pad that phase changes to a gaseous state at a high temperature to form a separation space between the base plate and the cell stack assemblies fixed to the support part.

2. The battery pack of claim 1, wherein the support part and the heat-conducting pad are configured to form a separation space between the base plate and the corresponding cell stack assembly due to vaporization of the heat-conducting pad during heat generation in any one of the plurality of cell stack assemblies or thermal runaway, preferably wherein the heat-conducting pad functions to transfer heat generated by the cell stack assembly to the base plate for dissipation through the base plate during normal operation of the battery pack.

3. The battery pack of claim 1 or 2, wherein the separation space is configured to inhibit heat from the corresponding cell stack assembly from propagating to neighboring cell stack assemblies.

4. The battery pack of any one of claims 1 to 3, wherein:
the base plate includes a plurality of cell stack areas where each cell stack assembly is located in each of the plurality of cell stack areas,
the sidewall extends vertically and is coupled along an edge of the base plate to enclose the plurality of cell stack areas, and
the bulkhead is coupled to the sidewall and compartmentalizes the base plate to form the plurality of cell stack areas, wherein the sidewall and/or the bulkhead has its support part projecting inwardly at an inner lower part thereof to support each cell stack assembly;.

5. The battery pack according to any one of claims 1 to 4, wherein the support part is formed along an inner lower part of a sidewall or bulkhead to support an edge of the lower surface of the cell stack assembly.

6. The battery pack of claim according to any one of 1 to 5, wherein the support part is a silicate member composed of silicates containing one or more of the following elements: silicon Si, aluminum Al, iron Fe, magnesium Mg, manganese Mn, titanium Ti, sodium Na, potassium K fluorine F, and oxygen O.

7. The battery pack of according to any one of claims 1 to 6, wherein the heat-conducting pad includes a polymer that vaporizes or sublimates at 100 to 800°C.

8. The battery pack of according to any one of claims 1 to 7, wherein the heat-conducting pad has a structure in which a heat-conducting filler is dispersed in a matrix including a polymer that vaporizes or sublimates at 100 to 800°C.

9. The battery pack of according to any one of claims 1 to 8, wherein the heat-conducting pad comprises: a first layer in which a lower surface abuts a base plate, and a second layer disposed on the first layer and having an upper surface abutting the cell stack assembly.

10. The battery pack of claim 9, wherein the heat-conducting pad has a content of heat-conducting filler in the first layer greater than the content of heat-conducting filler in the second layer.

11. The battery pack of according to any one of claims 8 to 10, wherein the heat-conducting filler is included in an amount of 1 wt.% to 30 wt.% with respect to a total weight of the heat-conducting pad.

12. The battery pack of according to any one of claims 8 to 11, wherein the heat-conducting filler includes one or more of the following: aluminum, copper, zinc, magnesium, stainless steel, silver, alumina Al₂O₃, silicon dioxide SiO₂, aluminum nitride AlN₃, carbon nanotubes, silicon carbide SiC, graphite, and activated carbon.

13. The battery pack of according to any one of claims 1 to 12, wherein the heat-conducting pad has an average thickness of 0.5 mm to 5.5 mm, and a thickness equal to or greater than the separation distance between the cell stack assembly and the base plate.

14. The battery pack according to any one of claims 1 to 8, wherein the heat-conducting pad is a single-layer structure, preferably with a same thickness as the support part.

15. The battery pack according to any one of claims 1 to 14, wherein the heat-conducting pad is disposed throughout or partially in the cell stack area of the base plate.
